# EUROPEAN PATENT APPLICATION

(11) **EP 2 290 237 A2**
(43) Date of publication of application: **02.03.2011**
(21) Application number: 10174467.0
(22) Date of filing: 30.08.2010
(51) Int. Cl.: F03D 11/04

(54) **A load transferring device in a wind turbine support structure**

(30) Priority: 31.08.2009 NO 20092912
(71) Applicant: Aker Jacket Technology AS, 1326 Lysaker (NO)
(72) Inventor: Melhus, Bjørn, N-0363, Oslo (NO)
(74) Representative: Onsagers AS

(57) **Abstract**

A load transferring device (10) for connection between a circular column (2) and a supporting structure (4), said load transferring device (10) comprising a tubular element (2') for connection to the circular column (2) and a plurality of members (18) for connection to the supporting structure (4). Each member (18) is connected to the tubular element (2') periphery via a respective girder element (23) having a first side wall (22a) and a second side wall (22b), and extending substantially perpendicularly with respect to the tubular element (2') longitudinal axis, whereby torsion in the tubular element (2') is converted to tensile and compressive loads in said girder elements.

## Description

### Field of the invention

The invention concerns devices for transferring loads between a circular element and a supporting structure. More particularly, the invention concerns a load transferring device as set out in the introduction to the independent claim 1.

### Background of the invention

The state of the art includes slender circular columns for supporting wind powered plants for generating electricity. When such plants are to be installed at sea, it is common to support the column by a structure resting on the seabed and extending a comparably short distance above the sea. Such supporting structure may e.g. be a truss structure, also referred to as a "jacket", fixed to the seabed via piles or similar devices known in the art.

The circular column, carrying the wind turbine and generator, is subjected to vertical loads, bending moments and torsion which have to be transferred into the supporting structure (e.g. the jacket).

The state of the art also includes interface structures for transferring loads and moments from the circular column to the supporting structure. One such interface structure is made of reinforced concrete, thereby providing a comparably large mass for absorbing the column loads and moments.

GB 2 419 150 B (Wood) discloses a cast steel or part cast steel ring node for an offshore windmill or other similar tower support base, which has one or more partial stub extensions shaped as semi-circular, section protrusions such that connecting tubular secondary legs connect partly to these stubs and partly to the main tower body of the windmill, and therefore have mitred connecting ends at different angles. The ring node, when pre-connected to one or more secondary legs as an assembly, may be mated onto and lowered over a tower pile, pre-installed into the sea-bed. When these secondary legs are also piled in place on the sea-bed, and the ring node fixed in some way to the tower column, the whole assembly becoming a more efficient support structure for an offshore windmill or similar structure.

EP 2 072 685 Al (Weserwind GmbH) discloses transition piece of multiple similar transition piece parts, where the transition piece is arranged at an end of a support structure. The transition piece parts are welded with each other by a welding seam lying in a vertical plane. Transition piece part is connected with columns of the support structure by a transition node. Front surfaces are welded to the transition piece parts with joining areas of the transition node, and run transverse to a longitudinal direction.

WO 2006/004417 A1 (Owec Tower AS) discloses a device for a diagonal strut connection between a circular column and a jacket structure, having at least two diagonal struts. Horizontal and vertical forces in the column are transmitted to the diagonal strut by means of a first set of shear forces along the attachment of the diagonal strut to the column, and via a second set of shear forces along the attachment of the diagonal strut to an annular plate surrounding and projecting radially from the column. The central axis of the diagonal strut extends through or close to the intersection of the resultants of the first and the second sets of shear forces.

One problem with the interface structures of the prior art is the requirement for adding reinforcements steel in order to transfer the moments and loads from the column to the supporting structure, and in order to account for torsion in the column.

The invention overcomes at least some of the shortcomings associated with the prior art and offers further advantages.

### Summary of the invention

The invention is set forth and characterized in the main claim, while the dependent claims describe other characteristics of the invention.

The load transferring device according to the invention comprises an element for connection between a circular column and a supporting structure, said load transferring device comprising a tubular element for connection to the circular column and a plurality of members for connection to the supporting structure, characterized by each member being connected to the tubular element periphery via a respective girder element having a first side wall and a second side wall, and extending substantially perpendicularly with respect to the tubular element longitudinal axis, whereby torsion in the tubular element is converted to tensile and compressive loads in said girder elements.

In one embodiment, the first side wall of any given girder element is connected to the tubular element at or in the region where the second side wall of an adjoining girder element is connected to the tubular element, and vice versa.

The region on the tubular element between side walls of adjoining girder elements is defined by an arc length along the tubular element periphery determined by a sector having an angle, whereby moment loads from the circular column is transferred to supporting structure via the members and along the tubular element periphery as well as the extended plate elements attached to the tubular element.

In a preferential embodiment, the girder element also comprises a first plate element and a second plate element connected between the tubular element and the respective member and to the respective first and second side walls, and arranged perpendicularly to said side walls. The first and second side walls extend between the first and second plate elements in a direction which is generally parallel with the tubular element longitudinal axis.

The load transferring device preferably also comprises upper and lower connector sections between the respective upper and lower plate elements of adjoining girder elements.

The girder element may comprise a box girder having side walls and upper and lower plate elements, or the first and second side walls may be part of I-beams.

The members are preferably aligned substantially axially parallel with the tubular element periphery.

Preferably, the angle is in the region 0° to ±30°, more preferably in the region of 10°.

With the load transferring interface element according to the invention, loads from the tower are carried along the periphery of the tubular element, and skew loads are avoided. The invented interface element will therefore have a smaller axial extension than those of the prior art, and additional reinforcement within is not necessary.

The perpendicular arrangement of the girder elements ensures that torsion in the tower - and thus in the tubular element - is converted into tensile loads and compressive loads in the girder elements, more specifically in the side walls.

The fact that the girder elements are attached to the tubular element in an eccentric fashion - and not extending through the center line of the tubular element - ensures that the bending moments are significantly reduced and that torsion is accommodated for in an efficient manner.

The load transferring device according to the invention does also not require any cast metal insert for reinforcement purposes.

### Brief description of the drawings

These and other characteristics of the invention will be clear from the following description of a preferential form of embodiment, given as a non-restrictive example, with reference to the attached drawings wherein:
Figure 1 is a principle sketch showing a wind turbine atop a tower connected to truss structure via the load transferring device according to the invention;
Figure 2 is a perspective view of an embodiment of the load transferring device according to the invention, connected to the tower and the supporting truss structure;
Figure 3 is a perspective view of an embodiment of the load transferring device according to the invention;
Figure 4 is a top view of the embodiment of the load transferring device illustrated in figure 3, with the upper plate elements removed;
Figure 5 is a top view similar to figure 4, but illustrating a second embodiment of the load transferring device according to the invention;
Figure 6 is a top view similar to figure 4, but illustrating a third embodiment of the load transferring device according to the invention;

### Detailed description of a preferential embodiment

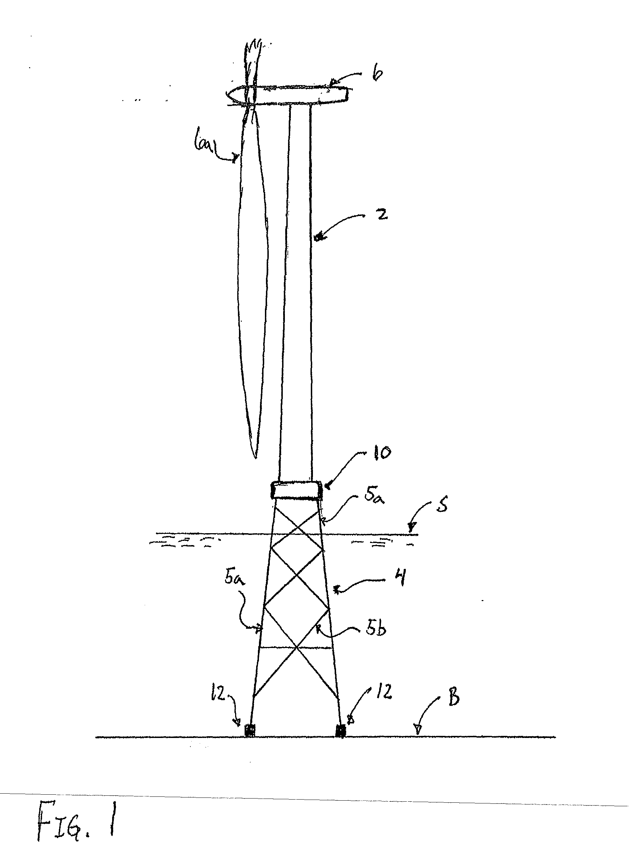

Figure 1 is a schematic illustration of a wind-powered plant for generating electricity. A truss structure 4, commonly referred to as a "jacket" is installed on a seabed B below a body of water via foundation 12, in a manner well known in the art. The jacket 4 is in figure 1 shown as having main supports - or legs - 5a and diagonal struts 5b, and extends a distance above the water surface S.

The jacket 4 supports a circular column 2, or tower, which in turn carries a wind turbine 6 having at least one turbine blade 6a. The action of the wind, both directly and via the rotation of the turbine, generates considerable torsion in the tower, as well as bending moments in the transition between the tower and the jacket.

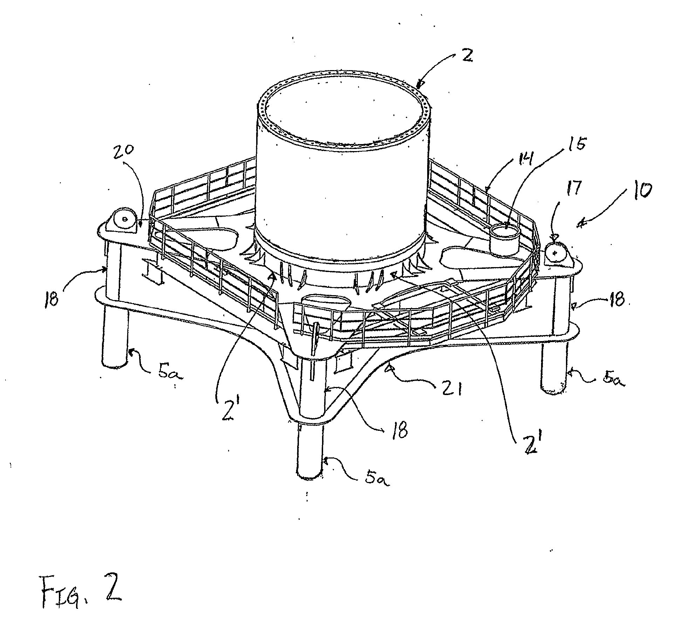

Figure 2 is an enlargement of the interface element 10 shown schematically in figure 1. In figure 2, the tower 2 and the jacket legs 5a are shown partially; the lower end of the tower 2 is connected coaxially with a tubular element 2' and each of the jacket legs 5a are connected to respective tubular members 18. the interface element 10 also comprises lifting lugs 17, railings and walkways 14 for access and work on the structure, and an attachment socket 15 for a pedestal crane (not shown).

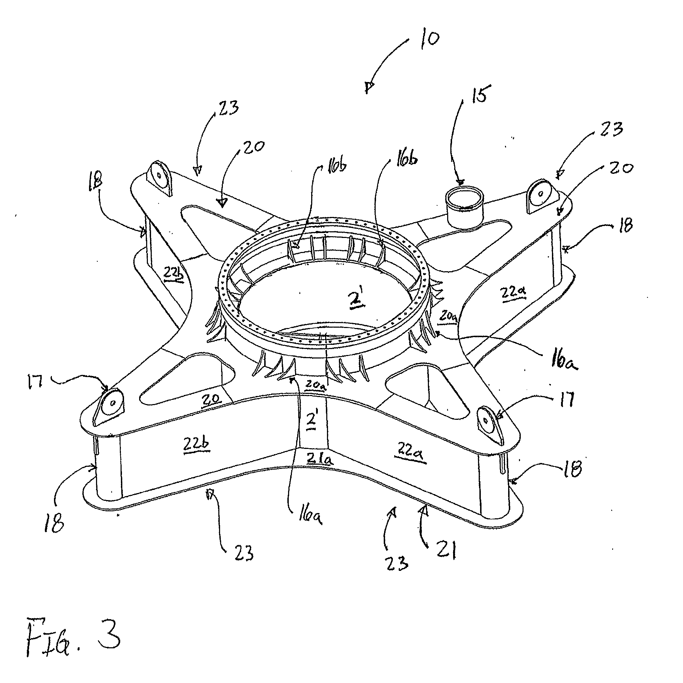

Turning now to figure 3, the interface element 10 is illustrated without the tower and the jacket legs. In addition to the components described with reference to figure 2, figure 3 also illustrates outside stiffeners 16a and inside stiffeners 16b for the circular element 2'.

Extending between the circular element 2' and each of the tubular members 18, are girder elements 23, arranged symmetrically around the circular element 2' periphery. The illustrated embodiment comprises four girder elements 23, corresponding to each of the four legs 5 a of the jacket. Each girder element 23 comprises two side walls 22a,b, for example in the form of I-beams, and upper and lower plate elements 20, 21. Respective connector plate section 20a, 21a connect upper and lower plate elements of adjoining girder elements.

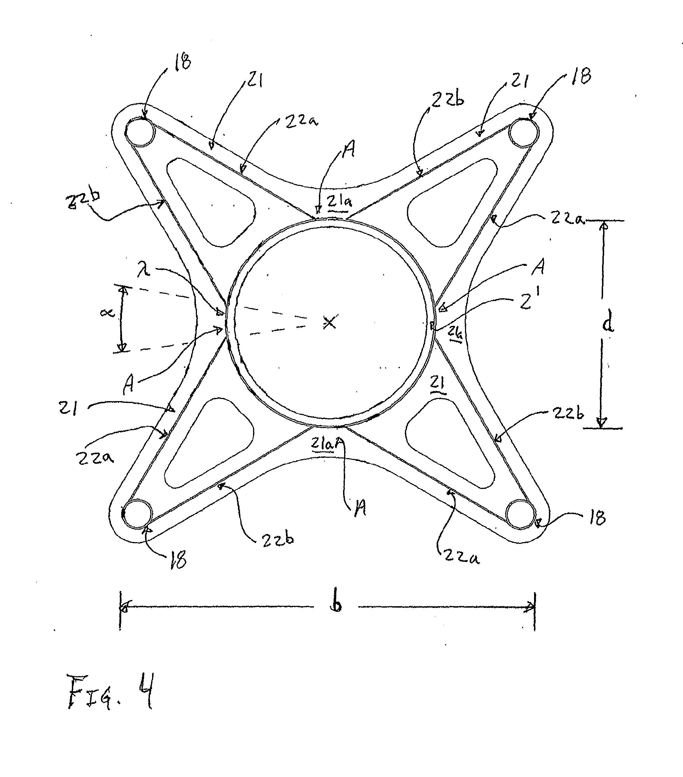

Turning now to figure 4, the embodiment illustrated in figure 3 is shown in a top view and with the upper plates 20, 20a removed in order to show how the side walls or 22a,b are connected to the periphery of the tubular element 2'. In this embodiment the side walls comprises individual I-girders joined together via the upper and lower plates, but the skilled person will understand that each girder element 23 may be made in the form of a box girder.

The girder element side walls 22a,b are connected to the tubular element 2' periphery, close to or at the location where a side wall of an adjoining girder element is connected. In figure 4, this region is identified with the reference letter A.

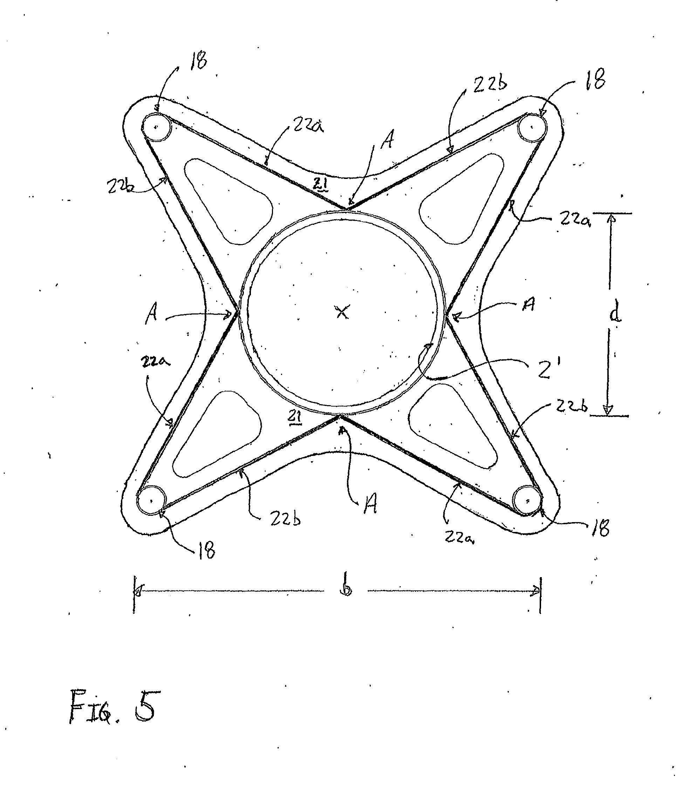

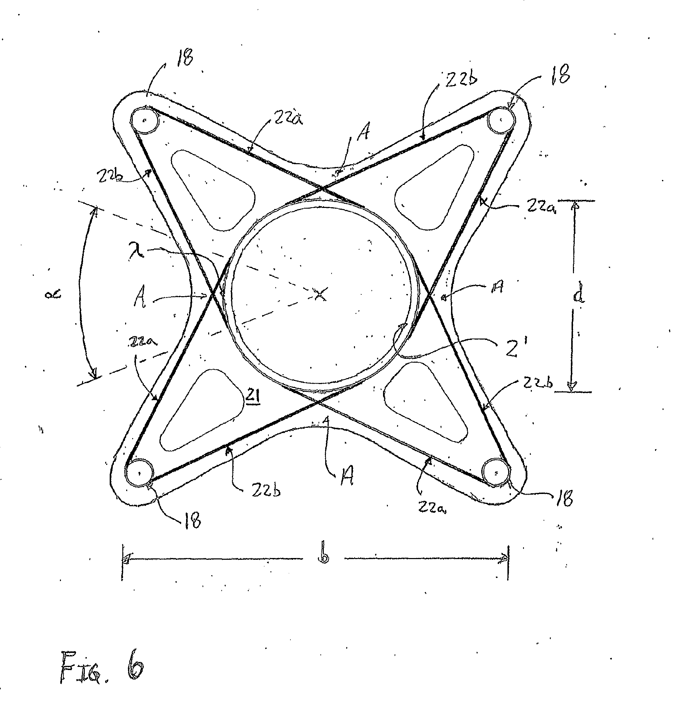

In the embodiment shown in figure 5, adjoining side walls are connected to the same location, whereby all the loads caused by the tower 2 (and thus by the tubular element 2') are carried into the side walls as shear loads. From a point-of-view of reducing the stresses in the tubular element, the girder side walls should be connected to the tubular element as close as possible to the periphery. In a practical application, however (e.g. in order to avoid weld-on-weld), it is often practical to attach the side walls to the tubular element as illustrated in figures 4 or 6, i.e. with an arc length λ between the side walls of each adjoining girder element 23. This arc length λ is determined by the an angle α, ranging between 0° and ±30°. In a preferred embodiment, α is in the region of 10°.

## Claims

1. A load transferring device (10) for connection between a circular column (2) and a supporting structure (4), said load transferring device (10) comprising a tubular element (2') for connection to the circular column (2) and a plurality of members (18) for connection to the supporting structure (4),
**characterized by:**
each member (18) being connected to the tubular element (2') periphery via a respective girder element (23) having a first side wall (22a) and a second side wall (22b), and extending substantially perpendicularly with respect to the tubular element (2') longitudinal axis,
whereby torsion in the tubular element (2') is converted to tensile and compressive loads in said girder elements.

2. The load transferring device of claim 1, wherein the first side wall (22a) of any given girder element (23) is connected to the tubular element (2') at or in the region (A) where the second side wall (22b) of an adjoining girder element (23) is connected to the tubular element (2'), and vice versa.

3. The load transferring device of any one of the preceding claims, wherein said region (A) on the tubular element (2') between side walls of adjoining girder elements (23) is defined by an arc length (λ) along the tubular element periphery determined by a sector having an angle (α),
whereby moment loads from the circular column is transferred to supporting structure via the members (18) and along the tubular element (2') periphery as well as the extended plate elements attached to the tubular element.

4. The load transferring device of any one of the preceding claims, wherein the girder element also comprises a first plate element (20) and a second plate element (21) connected between the tubular element and the respective member (18) and to the respective first and second side walls (22a,b), and arranged perpendicularly to said side walls.

5. The load transferring device of any one of the preceding claims, wherein the first and second side walls (22a,b) extend between the first and second plate elements in a direction which is generally parallel with the tubular element (2') longitudinal axis.

6. The load transferring device of any one of the preceding claims, further comprising upper (20a) and lower (21 a) connector sections between the respective upper (20) and lower (21) plate elements of adjoining girder elements (23).

7. The load transferring device of any one of claims 1 - 6, wherein the girder element (23) comprises a box girder having side walls (22a,b) and upper (20) and lower (21) plate elements.

8. The load transferring device of any one of claims 1 - 7, wherein the first and second side walls (22a,b) are part of I-beams.

9. The load transferring device of any one of the preceding claims, wherein said angle (α) is in the region 0° to +30°.

10. The load transferring device of any claim 9, wherein said angle (α) is in the region of 10°.
